# EUROPEAN PATENT APPLICATION

(11) **EP 4 633 224 A1**
(43) Date of publication of application: **15.10.2025**
(21) Application number: 23909854.4
(22) Date of filing: 27.11.2023
(51) Int. Cl.: H04W 24/06

(54) **INFORMATION TRANSMISSION METHOD AND COMMUNICATION DEVICE**

(30) Priority: 30.12.2022 CN 202211741122
(71) Applicant: Huawei Technologies Co., Ltd., Shenzhen, Guangdong 518129 (CN)
(72) Inventor: GENG, Tingting, Shenzhen, Guangdong 518129 (CN)
(74) Representative: MERH-IP Matias Erny Reichl Hoffmann Patentanwälte PartG mbB
(86) International application number: PCT/CN2023/134360
(87) International publication number: WO 2024/139923

(57) **Abstract**

This application provides an information transmission method, a communication apparatus, and a computer-readable storage medium. The method includes: sending, to a communication device, a request message used to request monitoring information; and receiving the monitoring information from the communication device, where the monitoring information includes output information obtained by the communication device by performing AI model inference and reference information related to the AI model inference, so that performance of an AI model can be accurately evaluated by using the monitoring information.

## Description

### TECHNICAL FIELD

This application relates to the field of wireless communication technologies, and in particular, to an information transmission method and a communication apparatus.

### BACKGROUND

Artificial intelligence (artificial intelligence, AI) is a technology that performs complex computing by simulating a human brain. With the improvement of data storage and computing capabilities, artificial intelligence is increasingly used. The 3rd generation partnership project (3rd generation partnership project, 3GPP) proposes to apply artificial intelligence to a wireless communication system, to improve network performance and user experience through intelligent collection and data analysis.

A communication device, for example, a terminal or an access network device, may perform inference based on an AI model. However, currently, performance of the AI model cannot be accurately evaluated.

### SUMMARY

This application provides an information transmission method and a communication apparatus, to improve accuracy of evaluating performance of an AI model.

According to a first aspect, this application provides an information transmission method, applied to an AI model management network element. The method includes: requesting monitoring information from a communication device; and receiving the monitoring information from the communication device, where the monitoring information includes output information of AI model inference and reference information related to the AI model inference.

According to the information transmission method provided in this application, the AI model management network element may receive, from the communication device, the monitoring information including the output information obtained by performing the AI model inference and the reference information. Therefore, the AI model management network element may accurately evaluate performance of an AI model by using the monitoring information, and determine an appropriate management policy for the AI model, to improve accuracy of the AI model inference.

In a possible implementation of the first aspect, requesting the monitoring information from the communication device includes: sending, to the communication device, configuration information used to configure the monitoring information.

In a possible implementation of the first aspect, the method further includes: determining, based on the monitoring information, an operation manner of an AI model used by the communication device. In the implementation, the AI management network element may correspondingly adjust, in a timely and accurate manner based on the monitoring information, the AI model used by the communication device.

For example, the operation manner includes any one of the following: changing the AI model used by the communication device, optimizing the AI model used by the communication device, deactivating the AI model used by the communication device, or deleting the AI model used by the communication device.

In a possible implementation of the first aspect, the method further includes: notifying the communication device of the determined operation manner. In this way, the communication device may update the AI model in a timely manner to obtain a more accurate AI inference result, to improve performance of the AI model; or stop using an inappropriate AI model in a timely manner, to save transmission resources.

In a possible implementation of the first aspect, the method further includes: determining an AI model for the communication device, and indicating the AI model to the communication device. For example, non-radio information may be received from the communication device, and an AI model that matches the non-radio information is determined.

In a possible implementation of the first aspect, receiving the monitoring information from the communication device includes: receiving a monitoring information set from the communication device, where the monitoring information set includes monitoring information whose quantity reaches a predetermined quantity and that is stored in the communication device, or includes monitoring information that reaches a capacity threshold and that is stored in the communication device. In the implementation, the communication device may report, to the AI management network element at a time, the monitoring information set including a plurality of pieces of monitoring information, to reduce excessive signaling overheads caused by frequent sending of the monitoring information.

In a possible implementation of the first aspect, receiving the monitoring information from the communication device includes: receiving a monitoring information set from the communication device in a connected state, where the monitoring information set includes the monitoring information obtained when the communication device is in a non-connected state. A delayed reporting manner is configured, so that the communication device may collect the monitoring information even if the communication device is in the non-connected state, and therefore the AI management network element may obtain more comprehensive monitoring information.

According to a second aspect, this application provides an information transmission method, applied to a communication device. The method includes: receiving a request for monitoring information from an AI management network element; and sending the monitoring information to the AI management network element, where the monitoring information includes output information of AI model inference and reference information related to the AI model inference.

According to the information transmission method provided in this application, the communication device sends, to the AI model management network element, the monitoring information including the output information obtained by performing the AI model inference and the reference information. Therefore, the AI model management network element may accurately evaluate performance of an AI model by using the monitoring information, and determine an appropriate management policy for the AI model, to improve accuracy of the AI model inference.

In a possible implementation of the second aspect, receiving the request for the monitoring information from the AI management network element includes: receiving, from the AI management network element, configuration information used to configure the monitoring information.

In a possible implementation of the second aspect, the method further includes: receiving, from the AI management network element, a notification for an operation manner of an AI model used by the communication device.

In a possible implementation of the second aspect, the method further includes: receiving an indication for an AI model determined by the AI management network element for the communication device. For example, the method further includes: sending non-radio information to the AI management network element, where the non-radio information is used by the AI management network element to determine the AI model for the communication device.

In a possible implementation of the second aspect, sending the monitoring information to the AI management network element includes: sending a monitoring information set to the AI management network element, where the monitoring information set includes monitoring information whose quantity reaches a predetermined quantity and that is stored in the communication device, or includes monitoring information that reaches a capacity threshold and that is stored in the communication device.

In a possible implementation of the second aspect, the communication device is in a connected state, and sending the monitoring information to the AI management network element includes: sending a monitoring information set to the AI management network element, where the monitoring information set includes the monitoring information obtained when the communication device is in a non-connected state.

In a possible implementation of the second aspect, the configuration information further includes indication information indicating the communication device to analyze the output information; and the method further includes: after analyzing initial output information based on the indication information, determining partial output information that meets a preset condition, and indicating the partial output information to the AI management unit. In the implementation, the communication device may preliminarily analyze the monitoring information, and select to send the partial output information, to reduce signaling overheads for reporting the monitoring information.

In a possible implementation of the second aspect, the method further includes: determining distribution of the output information in one or more accuracy or confidence ranges.

In a possible implementation of the first aspect or the second aspect, the reference information indicates at least one of the following: input information used for performing the AI model inference; non-radio information corresponding to the output information; confidence information corresponding to the output information; accuracy information corresponding to the output information; actual measurement information at a moment corresponding to the output information; or correct labeling information at a moment corresponding to the output information.

For example, the non-radio information includes at least one of the following: location information of the communication device when the AI model inference is performed, vendor information of the communication device, channel type information of the communication device, antenna configuration information of a cell, beam configuration information of a cell, type information of a cell, or network deployment information.

In a possible implementation of the first aspect or the second aspect, the configuration information includes at least one of the following: first indication information indicating a type of the output information; second indication information indicating a reporting manner of the monitoring information; third indication information indicating the communication device to send the input information used for performing the AI model inference; fourth indication information indicating the communication device to send the non-radio information corresponding to the output information; fifth indication information indicating the communication device to send the actual measurement information at the moment corresponding to the output information; sixth indication information indicating the communication device to send the correct labeling information at the moment corresponding to the output information; seventh indication information indicating the communication device to send accuracy corresponding to the output information; eighth indication information indicating the communication device to send confidence corresponding to the output information; or accuracy threshold information of the output information.

For example, the first indication information indicates the communication device to send any one or more types of the following output information: cell information, a channel state information CSI report, beam information, or positioning information.

In a possible implementation of the first aspect or the second aspect, the reporting manner includes: immediate reporting, centralized reporting, or delayed reporting.

In a possible implementation of the first aspect or the second aspect, when the reporting manner of the monitoring information is indicated as the centralized reporting, the configuration information further includes information related to a trigger condition for triggering the communication device to send the monitoring information.

For example, the trigger condition includes that a quantity of monitoring information stored in the communication device reaches a predetermined quantity or a stored amount of the monitoring information reaches a capacity threshold.

In a possible implementation of the first aspect or the second aspect, when the reporting manner of the monitoring information is indicated as the immediate reporting, the configuration information further includes information related to a trigger condition for triggering the communication device to send the monitoring information, or further includes a sending periodicity.

In a possible implementation of the first aspect or the second aspect, when the reporting manner of the monitoring information is indicated as the centralized reporting or the delayed reporting, the configuration information further includes at least one of the following: a recording interval of the monitoring information, valid area information, recording time range information of the monitoring information, or recording condition information of the monitoring information.

In a possible implementation of the first aspect or the second aspect, the output information includes partial output information that meets a condition and that is determined by the communication device by analyzing initial output information. The condition may be an accuracy or confidence interval predefined, or determined by the management network element. For example, the configuration information further includes indication information indicating the communication device to analyze the output information. Therefore, the communication device preliminarily analyzes the initial output information based on the indication information, for example, performs grouping based on an accuracy or confidence interval in which the output information is located, so that output information in some groups can be quickly reported to the AI model management network element, to reduce signaling overheads and facilitate AI model management.

In a possible implementation of the first aspect or the second aspect, the reference information includes ninth indication information, and the ninth indication information indicates distribution of the output information in one or more accuracy or confidence ranges.

In a possible implementation of the first aspect or the second aspect, the communication device is a terminal device, and the AI model management network element is a network device, an operation, administration and maintenance (operation, administration and maintenance, OAM) entity, or a third-party application service platform; or the communication device is a network device, and the AI model management network element is a terminal device, an OAM entity, or a third-party application service platform; and the network device includes an access network device or a core network device.

According to a third aspect, this application provides an information transmission method, applied to an AI model management network element. The method includes: requesting monitoring information from a communication device; and receiving the monitoring information from the communication device, where the monitoring information includes first indication information, and the first indication information indicates distribution of output information obtained through AI model inference in one or more accuracy or confidence ranges.

In a possible implementation of the third aspect, requesting the monitoring information from the communication device includes: sending, to the communication device, configuration information used to configure the monitoring information. For example, the configuration information includes indication information indicating the communication device to analyze the output information.

According to a fourth aspect, this application provides an information transmission method, applied to a communication device. The method includes: receiving a request for monitoring information from an AI management network element; and sending the monitoring information to the AI management network element, where the monitoring information includes first indication information, and the first indication information indicates distribution of output information obtained through AI model inference in one or more accuracy or confidence ranges.

In a possible implementation of the fourth aspect, receiving the request for the monitoring information from the AI model management network element includes: receiving, from the AI model management network element, configuration information used to configure the monitoring information. For example, the configuration information includes indication information indicating the communication device to analyze the output information.

In a possible implementation of the fourth aspect, the method further includes: determining distribution of the output information in one or more accuracy or confidence ranges.

In a possible implementation of the third aspect or the fourth aspect, the monitoring information further includes the output information and reference information related to the AI model inference. For examples of specific content of the output information and specific content of the reference information, refer to the descriptions in the first aspect or the second aspect.

In a possible implementation of the third aspect or the fourth aspect, the output information is obtained when the communication device is in a non-connected state. Correspondingly, the foregoing distribution is obtained by analyzing the output information obtained when the communication device is in the non-connected state.

In a possible implementation of the third aspect or the fourth aspect, the output information includes partial output information that meets a condition and that is determined by the communication device by analyzing initial output information. The condition may be an accuracy or confidence interval predefined, or determined by the management network element.

In a possible implementation of the third aspect or the fourth aspect, the communication device is a terminal device, and the AI model management network element is a network device, an OAM entity, or a third-party application service platform; or the communication device is a network device, and the AI model management network element is a terminal device, an OAM entity, or a third-party application service platform; and the network device includes an access network device or a core network device.

According to the information transmission method in the third aspect or the fourth aspect, the communication device may preliminarily analyze the output information obtained through the AI model inference, for example, perform grouping based on an accuracy or confidence interval in which the output information is located, so that output information in some groups can be quickly reported to the AI model management network element, to reduce signaling overheads and facilitate AI model management.

According to a fifth aspect, an embodiment of this application provides a communication apparatus. The apparatus may be used as an AI model management network element, or a module (for example, a chip) used in the AI model management network element. The apparatus has a function of implementing any implementation method in the first aspect or the third aspect. The function may be implemented by hardware, or may be implemented by hardware executing corresponding software. The hardware or the software includes one or more modules corresponding to the function. The AI model management network element may be a terminal device, a network device, an OAM entity, or a third-party application service platform. The network device may be an access network device or a core network device.

According to a sixth aspect, an embodiment of this application provides a communication apparatus. The apparatus may be used as a communication device that uses an AI model, or a module (for example, a chip) used in an execution device of an AI model. The apparatus has a function of implementing any implementation method in the second aspect or the fourth aspect. The function may be implemented by hardware, or may be implemented by hardware executing corresponding software. The hardware or the software includes one or more modules corresponding to the function. The communication device may be a terminal device or a network device. The network device may be an access network device or a core network device.

According to a seventh aspect, an embodiment of this application provides a communication apparatus, including units, modules, or means (means) configured to perform steps of any implementation method in the first aspect to the fourth aspect.

According to an eighth aspect, an embodiment of this application provides a communication apparatus, including a processor and an interface circuit. The processor is configured to: communicate with another apparatus through the interface circuit, and perform any implementation method in the first aspect to the fourth aspect. There are one or more processors.

According to a ninth aspect, an embodiment of this application provides a communication apparatus, including a processor coupled to a memory. The processor is configured to invoke a program stored in the memory, to perform any implementation method in the first aspect to the fourth aspect. The memory may be located inside or outside the apparatus. In addition, there may be one or more processors.

According to a tenth aspect, an embodiment of this application further provides a computer-readable storage medium. The computer-readable storage medium stores instructions, and when the instructions are run on a communication apparatus, any implementation method in the first aspect to the fourth aspect is performed.

According to an eleventh aspect, an embodiment of this application further provides a computer program product. The computer program product includes a computer program or instructions, and when the computer program or the instructions are run on a communication apparatus, any implementation method in the first aspect to the fourth aspect is performed.

According to a twelfth aspect, an embodiment of this application further provides a chip system, including a processor, configured to perform any implementation method in the first aspect or the third aspect.

According to a thirteenth aspect, an embodiment of this application further provides a chip system, including a processor, configured to perform any implementation method in the second aspect or the fourth aspect.

According to a fourteenth aspect, an embodiment of this application further provides a communication system, including an AI model management network element configured to perform any implementation method in the first aspect and a communication device configured to perform any implementation method in the second aspect.

According to a fifteenth aspect, an embodiment of this application further provides a communication system, including an AI model management network element configured to perform any implementation method in the third aspect and a communication device configured to perform any implementation method in the fourth aspect.

### BRIEF DESCRIPTION OF DRAWINGS

FIG. 1 is a diagram of an architecture of a communication system to which an embodiment of this application is applied;
FIG. 2 is a schematic flowchart of an application of an AI function according to an embodiment of this application;
FIG. 3 is a schematic flowchart of an information transmission method according to an embodiment of this application;
FIG. 4 is a schematic flowchart of an information transmission method according to an embodiment of this application;
FIG. 5 is a schematic flowchart of an information transmission method according to an embodiment of this application;
FIG. 6 is a schematic flowchart of an information transmission method according to an embodiment of this application;
FIG. 7 is a schematic flowchart of an information transmission method according to an embodiment of this application;
FIG. 8 is a diagram of a possible structure of a communication apparatus according to an embodiment of this application; and
FIG. 9 is a diagram of a possible structure of a communication apparatus according to an embodiment of this application.

### DESCRIPTION OF EMBODIMENTS

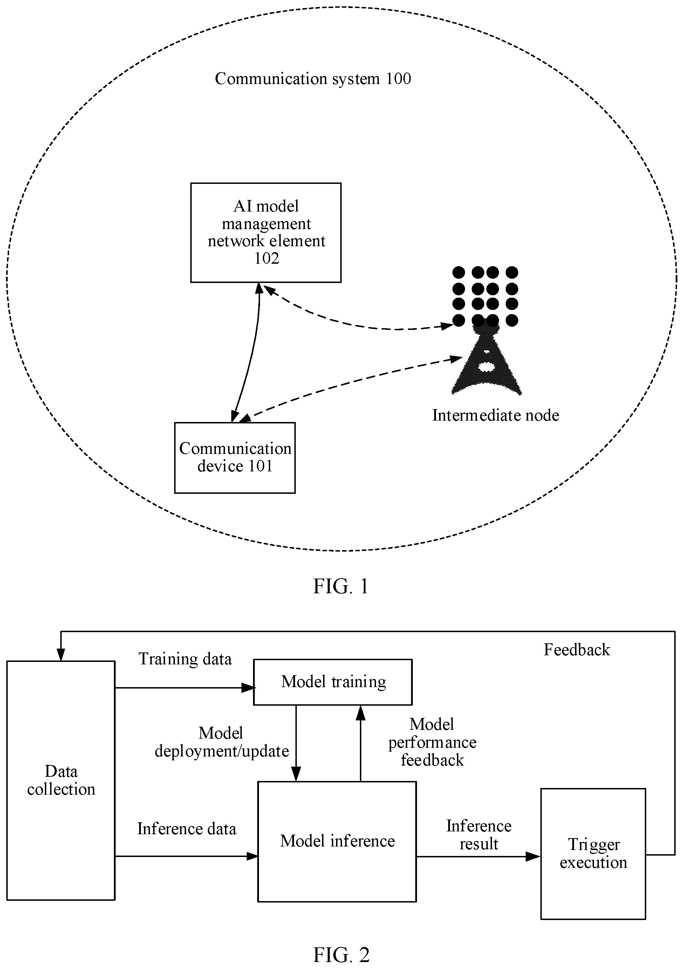

FIG. 1 is a diagram of an architecture of a communication system 100 to which an embodiment of this application is applied. The communication system 100 includes a communication device 101 and an AI model management network element 102. The communication device 101 and the AI model management network element 102 may directly communicate with each other or communicate with each other via an intermediate node.

The communication system is applicable to a plurality of communication networks, for example, a 5th generation (5th generation, 5G) mobile communication system such as a long term evolution (long term evolution, LTE) network, an enhanced long term evolution (enhanced long term evolution, eLTE) network, or a new radio (new radio, NR) network, or may be a 6th generation (6th generation, 6G) communication system or another future-oriented communication system. In addition, the communication system provided in this application may be used in a terrestrial network (terrestrial network, TN) and/or a non-terrestrial network (non-terrestrial network, NTN). This is not limited.

For example, the communication device 101 may be a terminal. In this application, the terminal may be various devices that provide voice and/or data connectivity for a user, and may communicate with one or more core networks through a radio access network (Radio Access Network, RAN). The terminal may also be referred to as a terminal device, user equipment (user equipment, UE), a mobile station, a mobile terminal, or the like. The terminal may be used in various communication scenarios, for example, device-to-device (device-to-device, D2D) communication, vehicle to everything (vehicle to everything, V2X) communication, machine-type communication (machine-type communication, MTC), the internet of things (internet of things, IOT), virtual reality (virtual reality, VR), augmented reality (augmented reality, AR), industrial control (industrial control), self driving (self driving), telemedicine (telemedical), smart grid (smart grid), smart furniture, smart office, smart wearable, smart transportation, smart city (smart city). The terminal device may be a mobile phone (mobile phone), a tablet computer (pad), a computer with a wireless transceiver function, a wearable device, an aerospace device, an uncrewed aerial vehicle device, or the like. In embodiments of this application, a chip used in the foregoing devices may also be referred to as a terminal.

For example, the communication device 101 may be an access network device. In this application, the access network device may be various types of base stations, for example, an evolved NodeB (evolved NodeB, eNodeB), a transmission reception point (transmission reception point, TRP), a next generation NodeB (next generation NodeB, gNB), or another base station in a future-oriented communication system. In addition, when the eNB is connected to a 5G core network (5G Core network, 5GC), the LTE eNB may also be referred to as an eLTE eNB, and the eLTE eNB may also be considered as a base station device in an NR system. The access network device may alternatively be a wireless relay node, a wireless backhaul node, or the like. The base station may be a macro base station, or may be a micro base station, an indoor base station, or the like. The access network device may alternatively be a module or a unit that implements a part of functions of a base station. For example, the access network device may alternatively include a central unit (central unit, CU) and/or a distributed unit (distributed unit, DU). The CU and the DU may be understood as division of the access network device from a perspective of logical functions. The CU and the DU may be physically separated, or may be deployed together. This is not specifically limited in embodiments of this application. One CU may be connected to one DU, or a plurality of DUs may share one CU. The CU and the DU may be split based on a protocol stack. In a possible manner, a radio resource control (radio resource control, RRC) layer, a service data adaptation protocol stack (service data adaptation protocol, SDAP) layer, and a packet data convergence protocol (packet data convergence protocol, PDCP) layer are deployed on the CU, and the remaining radio link control (radio link control, RLC) layer, media access control (media access control, MAC) layer, and physical layer are deployed on the DU. The foregoing protocol stack-based division manner is not completely limited in the present invention, and there may be other division manners.

The access network device in embodiments of this application may alternatively be a central unit control plane (CU-CP) node or a central unit user plane (CU-UP) node, or may include a CU-CP and a CU-UP. The CU-CP is responsible for a control plane function, and mainly includes RRC and a PDCP-C. The PDCP-C is mainly responsible for data encryption and decryption, integrity protection, data transmission, and the like on the control plane. The CU-UP is responsible for functions of a user plane, and mainly includes the SDAP and a PDCP-U. The SDAP is mainly responsible for processing data of a core network and mapping a flow (flow) to a bearer. The PDCP-U is mainly responsible for encryption and decryption, integrity protection, header compression, serial number maintenance, data transmission, and the like on a data plane.

In different systems, the CU (including the CU-CP or the CU-UP) or the DU may also have different names, but a person skilled in the art may understand meanings thereof. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP. For ease of description, the CU, the CU-CP, the CU-UP, and the DU are used as an example for description in this application.

The access network device and the terminal may be deployed on land, including indoor or outdoor and handheld or vehicle-mounted devices, or may be deployed on water, or may be deployed on an airplane, a balloon, or a satellite in the air. Application scenarios of the access network device and the terminal device are not limited in embodiments of this application.

For example, the communication device 101 may be a core network device, and the core network device may include one or more core network elements. The 5G core network is used as an example. The 5G core network includes an access and mobility management function (access and mobility management function, AMF) network element responsible for mobility management, access management, and other services, a session management function (session management function, SMF) network element responsible for session management, a user plane function (user plane function, UPF) network element responsible for data packet routing and forwarding and quality of service (quality of service, QoS) control of a user plane, a policy control function (policy control function, PCF) network element, and the like. The core network elements may work independently, or may be combined to implement some control functions. For example, the AMF, the SMF, and the PCF may be combined to serve as a core network device.

The AI model management network element 102 is a network element that manages an AI model or a network element that has an AI model management function, and may also be referred to as an AI model management entity or an AI model management node. An implementation of the AI model management network element is not limited in this application. The AI model management network element may be an independent device, or an existing device or functional entity to which an AI model management function is added, and the AI model management function may be implemented by hardware and/or software. For example, the AI model management network element 102 may be at least one of a terminal, a network device, an operation, administration and maintenance (operation, administration and maintenance, OAM) entity, or a third-party application service. The network device may be an access network device or a core network device. The OAM may also be referred to as an OAM entity or an OAM function and means that network management work is usually classified into three categories based on actual requirements of operator network operating: operation (operation), administration (administration), and maintenance (maintenance), OAM for short. Operation is mainly to analyze, forecast, plan, and configure routine network and services. Maintenance mainly refers to routine operation activities such as network and service testing and fault management. The OAM can detect a network running status, optimize network connections and performance, improve network running stability, and reduce network maintenance costs. The third-party application service platform may be the over the top (over the top, OTT) or another service provider that can provide an application service. The OTT means providing various application services for a user by using the internet. This application is different from a communication service provided by a current operator. The OTT uses only a network of the operator, and a service is provided by a third party other than the operator. For example, OTT services include an internet television service and an application store.

In an example, the communication device 101 is a terminal, and the AI model management network element 102 is a network element other than an access network device. For example, if the AI model management network element is a core network device, an OAM, or a third-party application platform, the communication system 100 includes a terminal, an access network device, and the AI model management network element 102. The terminal may communicate with the AI model management network element 102 via the access network device. Specifically, the terminal may send information to the access network device, and then the access network device sends the information to the AI model management network element 102; or the AI model management network element 102 may send information to the access network device, and then the access network device sends the information to the terminal.

For ease of understanding solutions of this application, the following describes some nouns or terms in this application. The nouns or the terms also belong to a part of the present invention.

### 1. AI function

The AI function is also referred to as an AI application scenario. FIG. 2 is a schematic flowchart of an application of an AI function according to an embodiment of this application. As shown in FIG. 2, data collection (data collection) storage may include a data input from a network device, a terminal, or another management entity, and is used as a database for AI model training and data analysis and inference. Model training (model training) is for analyzing training data (training data) provided by data collection to provide an AI model. Model inference (model inference) means using an AI model to provide AI model-based reasonable inference for network running or guide a network to perform policy adjustment based on data provided by data collection. Related policy adjustment is performed by a trigger executor (Actor). In addition, after a related policy is applied, specific performance of the network, for example, various performance parameters, is input to the database again for storage. With reference to the communication system in FIG. 1, in an example, model inference may be performed by the communication device 101, and data collection, model training, and trigger execution may be performed by the AI model management network element 102.

The AI function includes but is not limited to: channel state information reference signal (channel state information reference signal, CSI-RS) feedback enhancement (CSI-RS feedback enhancement), beam management enhancement (beam management enhancement), and positioning enhancement (positioning accuracy enhancement). The following provides descriptions separately. For example, one AI function may include a plurality of AI sub-functions or a plurality of AI sublayers.

### (1) CSI-RS feedback enhancement

Channel state information (Channel State Information, CSI) may reflect a channel attribute of a communication link, and a terminal reports a CSI report to a network device, to select a more appropriate modulation and coding scheme (modulation and coding scheme, MCS) for the terminal. The CSI report may include any one or more types of information or parameters used to reflect the channel attribute, for example, include at least one of the following: a channel quality indicator (channel quality indicator, CQI), a precoding matrix indicator (precoding matrix indicator, PMI), a CSI-RS resource indicator (CSI-RS resource indicator, CRI), a layer indicator (layer indicator, LI), or a rank indicator (rank indicator, RI).

The CSI-RS feedback enhancement may include at least one sub-function, for example, CSI compression, CSI prediction, and CSI-RS configuration signaling reduction. The CSI compression may be further classified into CSI compression in at least one of space domain, time domain, or frequency domain.

For example, the terminal performs channel estimation based on a received CSI-RS, and then feeds back CSI to the network device. The information is used as an input of an AI model of the network device, so that the network device implements AI model training, and the network device may notify the terminal of a trained AI model. AI is applied to the CSI feedback enhancement, so that overheads can be reduced, accuracy can be improved, prediction can be implemented, and the like.

### (2) Beam management enhancement

The beam management enhancement may include at least one sub-function, for example, beam sweeping matrix prediction and optimal beam prediction. Based on AI training and inference, there may be AI sparse beam prediction on a network side and AI sparse beam prediction on a terminal device side. The AI sparse beam prediction on the terminal device side is used as an example. A pre-trained AI model on the terminal device side may be delivered by the network side, or may be pre-stored on the terminal device side. In a training phase, the network device sweeps all possible beams, and then the network device notifies the terminal of a transmit beam pattern. When model training is completed, the network device may sweep only a part of beams, and then the terminal device feeds back an inference result to the network device. AI-based beam management can implement, for example, beam prediction in time domain and/or space domain, to reduce overheads and a delay, and improve beam selection accuracy.

### (3) Positioning enhancement

The positioning enhancement may include at least one sub-function, for example, positioning enhancement based on an access network device, positioning enhancement based on a positioning management function network element, and positioning enhancement based on a terminal device. The positioning enhancement may be used to improve positioning accuracy. For example, in a line-of-sight (line of sight, LOS) transmission or non-line-of-sight (not line of sight, NLOS) transmission scenario, a location management node (LMF) and an access network device may separately train an AI model, the LMF may infer final positioning of the terminal, and the access network device may infer a LOS/NLOS determining result, so that positioning accuracy is improved in a case of a small quantity of TRP antennas.

The communication device 101 may activate AI models applied to different AI application scenarios, and perform inference based on the AI model to obtain monitoring information. To monitor running performance of the AI model, the AI model management network element 102 collects output information from the communication device 101. The communication device 101 may send the monitoring information to the AI model management network element 102 directly or via another device. The AI model management network element 102 may also be considered as a receiving device of the monitoring information.

To comprehensively evaluate inference performance of an AI model, this application provides an information transmission method. The information transmission method is applicable to the communication system 100 described in FIG. 1. It may be understood that the method provided in this application may be performed by a communication device and/or an AI function management network element, or may be performed by a module (for example, a chip) used in the communication device and/or the AI function management network element. The following describes a wireless communication method provided in this application by using the communication device and the AI function management network element as execution bodies.

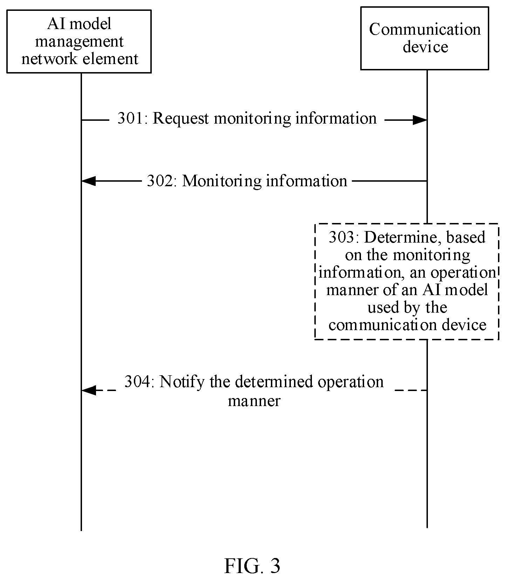

FIG. 3 is a schematic flowchart of an information transmission method according to an embodiment of this application. The method includes the following steps.

S301: An AI model management unit (a "management network element" for short below) requests monitoring information from a communication device.

In an implementation, that the management network element requests the monitoring information from the communication device includes: The management network element sends, to the communication device, request information used to request the monitoring information. The communication device determines, based on the received request information, to send the monitoring information to the management network element. The request information may be any existing information sent by the management network element to the communication device, or may be information specially set for requesting the monitoring information. In addition, a name of the request information is not limited in this application. For example, the request information may be layer 1 (layer 1) or layer 2 (layer 2) signaling, or a radio resource control (radio resource control, RRC) message.

In an implementation, that the management network element requests the monitoring information from the communication device includes: The management network element sends, to the communication device, configuration information used to configure the monitoring information. The communication device determines, based on the received configuration information, to send the monitoring information to the management network element.

In an implementation, when the management network element sends the request information and the configuration information to the communication device, the configuration information may be included in the request information, or may be sent to the communication device independently of the request information. For example, the configuration information is included in a message other than the request information and sent to the communication device. In addition, when the configuration information is sent independently of the request information, a sequence of sending the configuration information and sending the request information is not limited.

S302: The communication device sends the monitoring information to the management network element. Correspondingly, the management network element receives the monitoring information.

The monitoring information includes output information obtained by the communication device by performing AI model inference and reference information related to the AI model inference. In this application, the monitoring information may also be referred to as monitoring data, the output information may also be referred to as output data, and the reference information may also be referred to as reference data. For example, the monitoring information may be obtained and stored by the communication device before receiving the request information, or may be obtained by the communication device after receiving the request information.

In an implementation, the output information and the reference information may be transmitted by using a same message or same signaling, for example, included in a same information element (information element, IE) or different information elements of a same message.

In an implementation, the output information and the reference information may be transmitted by using different messages or signaling. For example, the output information is included in layer 1 or layer 2 signaling, and the reference information is included in an RRC message. In addition, a sequence of sending a message or signaling including the output information and a message or signaling including the reference information is not limited in this application.

In an implementation, the communication device is a terminal, the management network element is a base station, and the base station uses a CU-DU architecture, or the management network element is a DU. The terminal may send the monitoring information to a CU, and then the CU sends the monitoring information to the DU; or the terminal directly sends the monitoring information to the DU. Therefore, the DU may determine, based on the monitoring information, a management policy for an AI model used by the terminal.

For example, the configuration information includes at least one of the following information:
(1) Indication information (indication information #A) indicating a type of the monitoring information. The indication information may also be referred to as type indication information, and indicates the type of the output information reported by the communication device. For example, the type of the output information includes but is not limited to cell information, a CSI report, beam information, and positioning information. The cell information includes, for example, cell identification information, or cell identification information and signal quality information. The beam information includes, for example, beam identification information, or beam identification information and signal quality information. The signal quality information may include at least one of a received signal code power (received signal code power, RSCP), a reference signal received power (reference signal received power, RSRP), reference signal received quality (reference signal receiving quality, RSRQ), a signal noise ratio (signal noise ratio, SNR), a signal to interference plus noise ratio (signal to interference plus noise ratio, SINR), a reference signal strength indication (reference signal strength indication, RSSI), or other signal quality. Signal quality may be at at least one of a cell level, a beam level, a synchronization signal/physical broadcast channel block (synchronization signal/physical broadcast channel block, SS/PBCH Block) level, a channel state information reference signal (channel state information reference signal, CSI-RS) level, a numerology (numerology) level, a slice (slicing) level, or a bandwidth part (bandwidth part, BWP) level. The signal quality information may be obtained by measuring at least one of a downlink synchronization channel, a channel state information reference signal, a demodulation reference signal (demodulation reference signal, DMRS), a cell-specific reference signal (cell-specific reference signal, CRS) signal, a synchronization signal block (synchronization signal block, SSB), a synchronization signal/physical broadcast channel block, or another downlink signal. It may be understood that, if the signal quality is at the beam level, the synchronization signal/physical broadcast channel block level, the numerology level, the slice level, or the bandwidth part level, the cell information may include at least one of identification information corresponding to a beam, identification information corresponding to a synchronization signal/physical broadcast channel block, identification information corresponding to a channel state information reference signal, identification information corresponding to a numerology, identification information corresponding to a slice, or identification information corresponding to a bandwidth part. The beam information may include the beam identification information, or the beam identification information and the signal quality information of the beam. The positioning information may include at least one of quality information of downlink positioning reference information, information about a downlink time difference of arrival, information about an uplink time difference of arrival, information about a multi-cell round-trip delay, information about an angle of arrival, or information about an angle of departure.
   In another implementation, if the configuration information does not include the indication information #A, the type of the monitoring information that may be sent by the communication device may be predefined.
(2) Indication information (indication information #B) indicating a reporting manner of the monitoring information. For example, the reporting manner of the monitoring information includes immediate reporting, centralized reporting, or delayed reporting. If the immediate reporting is configured, the communication device may immediately report the monitoring information to the management network element after receiving the request information. Alternatively, the immediate reporting may mean that the terminal device immediately reports the monitoring information to the AI model management network element when determining that a condition for the immediate reporting is met, or the communication device periodically reports the monitoring information to the management network element after receiving the request information. If the centralized reporting is configured, the communication device collects monitoring information in a period of time or collects monitoring information whose quantity meets a predetermined quantity, and then reports a monitoring information set. If the communication device is a terminal, the delayed reporting may be configured. If the delayed reporting is configured, the terminal collects monitoring information in a non-connected state, and reports a monitoring information set after the terminal accesses a connected state. For example, configuration information for the delayed reporting is sent to the terminal before the terminal enters the non-connected state. The monitoring information set includes at least one piece of monitoring information, and specifically, includes at least one piece of output information and reference information corresponding to each piece of output information. It may be understood that one piece of output information and corresponding reference information may be considered as one piece of monitoring information. In an example in which the terminal infers a CQI in a CSI report by using an AI model, the terminal obtains a CQI #1 at a moment T1 through inference at a moment T0, where the CQI #1 corresponds to reference information #1, and obtains a CQI #2 at a moment T2 through inference at the moment T1, where the CQI #2 corresponds to reference information #2. In this case, the monitoring information set sent by the terminal may include {monitoring information #1, monitoring information #2}, where the monitoring information #1 includes the CQI #1 and the reference information #1, and the monitoring information #2 includes the CQI #2 and the reference information #2.

In an implementation, when the reporting manner of the monitoring information is indicated as the centralized reporting, the configuration information further includes information related to a trigger condition for triggering the communication device to send the monitoring information. For example, the trigger condition includes: a quantity of monitoring information stored in the communication device reaches a predetermined quantity, or a stored amount of monitoring information reaches a capacity threshold. Correspondingly, the configuration information may include a specific value of the predetermined quantity or a specific value of the capacity threshold. The predetermined quantity may be a maximum quantity of monitoring information that may be stored in the UE; and the capacity threshold may be a maximum capacity value of the monitoring information stored in the terminal or a threshold close to a maximum capacity value. It may be understood that "close to a maximum capacity" may mean that a payload of the monitoring information stored in the communication device is close to the maximum capacity, and/or that the communication device determines that a difference between the maximum capacity value and a capacity of the stored monitoring information is insufficient to record one piece of complete monitoring information. The predetermined quantity and/or the capacity threshold may be predefined, or may be received by the communication device from the AI model management network element or another network device.

An example in which the terminal infers the CQI in the CSI report by using the AI model is used to describe the centralized reporting manner. The monitoring information set stored in the terminal includes at least one CQI, and reference information respectively corresponding to the at least one CQI. For example, if a quantity of CQIs and/or reference information stored in the terminal reaches a predetermined quantity, the terminal sends the monitoring information to the management network element. For example, the predetermined quantity is eight pieces of information. If a quantity of CQIs stored in the terminal reaches 8, for example, a quantity of CQIs stored in the terminal at different moments reaches 8, or a quantity of reference information corresponding to CQIs at a same moment reaches 8, or a CQI and corresponding reference information at a same moment are used as one piece of information, and a quantity of information at different moments reaches 8, the terminal sends the monitoring information to the management network element. It may be understood that, in the centralized reporting manner, a type of the reference information that is counted is not limited. For example, the terminal may record a same type of reference information corresponding to the CQI. For example, the terminal records, at different moments, a same type of non-radio information corresponding to the CQI. For example, the terminal may also record, at different moments, different types of reference information corresponding to the CQI. For example, the terminal records, at a moment T1, non-radio information corresponding to the CQI, and records, at a moment T2, actual measurement information corresponding to the CQI. For example, the terminal may record different types of reference information corresponding to the CQI at a same moment. For example, the terminal records, at a moment T1, non-radio information and actual measurement information that correspond to the CQI. A quantity of a same type or different types of reference information may be used to count whether the quantity of monitoring information reaches the predetermined quantity.

In an implementation, the reporting manner of the monitoring information is indicated as the immediate reporting. When the immediate reporting is periodic reporting, the configuration information further includes a periodicity for sending the monitoring information by the communication device. When the immediate reporting is event-triggered reporting, the configuration information further includes information related to a trigger condition for triggering the communication device to send the monitoring information. When the trigger condition for reporting is met, the terminal reports the obtained monitoring information. For example, the configuration information includes a preset threshold, and the preset threshold is a threshold of accuracy of the output information of the AI model inference. When the communication device determines that the accuracy of the output information is less than or equal to the preset threshold, the communication device sends the monitoring information to the management network element.

In an implementation, when the reporting manner of the monitoring information is indicated as the centralized reporting or the delayed reporting, the configuration information further includes at least one of the following: a recording interval of the monitoring information, valid area information, recording time range information of the monitoring information, or recording condition information of the monitoring information. The recording interval indicates a time interval at which the communication device records the monitoring information. The valid area information indicates the communication device to record the monitoring information in an indicated area. The valid area information may include, for example, beam information, BWP information, physical area information, cell information, or other information indicating a monitoring range. The recording time range information indicates a time range in which the communication device may record the monitoring information, for example, including start time and end time, or including start time and duration information, or including duration information. If the recording time range information is the duration information, in an example, after the communication device receives the configuration information, the communication device starts a timer, and the communication device collects the monitoring information within running time of the timer. When the timer runs for the foregoing duration or the timer expires, the communication device stops collecting the monitoring information; or during running of the timer, if the communication device determines that the trigger condition for sending the monitoring information is met, the communication device stops collecting the monitoring information and stops the timer. The recording condition information indicates a condition for recording the monitoring information by the communication device. For example, the recording condition information of the monitoring information may include a signal quality threshold. The communication device records the monitoring information when signal quality of a cell or a serving beam is greater than or equal to the signal quality threshold. Alternatively, the recording condition information may include a first signal quality threshold and a second signal quality threshold. The communication device records the monitoring information when signal quality of a cell or a serving beam is greater than or equal to the first signal quality threshold and less than or equal to the second signal quality threshold.

In an implementation, when the reporting manner of the monitoring information is indicated as the centralized reporting or the delayed reporting, the communication device may analyze initial output information, for example, all output information of a same type that has been obtained by the communication device. Specifically, the communication device may analyze distribution of the obtained output information in different accuracy or confidence ranges, and therefore send, to the management network element, partial output information that meets a condition. It may be understood that the condition may be predefined in a protocol, or may be sent by the management network element to the terminal device. For example, the condition is an accuracy or confidence interval that is predefined, or determined by the management network element, and the terminal device sends output information that meets the accuracy or confidence interval to the management network element, so that the management network element can quickly determine whether an AI model corresponding to the output information needs to be updated, and there is no need to send all output information, to reduce signaling overheads. In addition, the communication device may further use distribution information that indicates distribution of the output information in different accuracy or confidence ranges as the reference information and send the reference information to the management network element.

For example, the configuration information includes indication information (indication information #1) indicating the communication device to analyze the output information. After receiving the indication information #1, the communication device analyzes the obtained output information. For example, the communication device may start analysis on the output information when a quantity of stored output information reaches a preset value.

In an implementation, the monitoring information sent by the communication device may include the distribution information, and does not include the output information. The management network element may quickly determine, based on the distribution information, the distribution of the output information in the different accuracy or confidence ranges, and therefore determine an appropriate management policy for the AI model used by the communication device, to reduce signaling overheads.

An example in which the terminal infers the CQI in the CSI report by using the AI model is used to describe the distribution information. It is assumed that an initial monitoring information set stored in the terminal includes a plurality of CQIs obtained through AI model inference and accuracy information corresponding to each CQI. The initial monitoring information set is represented as {{CQI #1, accuracy 1}, ..., {CQI #M, accuracy M}}, where M is an integer greater than 1, and the accuracy is represented as an integer in [0, 100]. That the terminal analyzes the CQI based on the accuracy information includes: determining distribution of CQIs in different accuracy ranges, for example, determining that a percentage of CQIs in an accuracy range (0 to x) is 35%, a percentage of CQIs in an accuracy range (x to y) is 55%, and a percentage of CQIs in an accuracy range (y to 100) is 10%. Further, the terminal may send a CQI in a preset accuracy range and corresponding reference information to the management network element. For example, if the terminal is preset or configured to send a CQI in a lowest accuracy range, the terminal may send the CQI in the accuracy range (0 to x) and corresponding reference information. In addition, the terminal may further send indication information indicating that the percentage of CQIs in (0 to x) is 35%, so that the management network element can quickly determine whether an AI model corresponding to the CQI in the accuracy range needs to be updated. Optionally, the terminal further sends, to the management network element, distribution information indicating the percentages of CQIs in the foregoing three accuracy ranges.

In an implementation, if the configuration information does not include the indication information #B, a manner in which the communication device sends the monitoring information may be predefined or a default manner. If the communication device is a terminal, and the terminal is in a connected state, it may be predefined that the terminal sends the monitoring information in the immediate reporting manner or the centralized reporting manner, or in the immediate reporting manner by default. If the terminal is in a non-connected state, the terminal sends the monitoring information in the delayed reporting manner by default.

In an implementation, the management network element may send configuration information related to the immediate reporting, configuration information related to the centralized reporting, and configuration information related to the delayed reporting to the communication device, and the communication device reports the monitoring information by using corresponding configuration information in a predefined or default reporting manner. Alternatively, the communication device selects a reporting manner based on whether a trigger condition for each reporting manner is met, or based on a network environment in which the communication device is located, or based on a requirement of the communication device, and reports the monitoring information by using corresponding configuration information.

(3) Indication information (indication information #C) indicating the communication device to send input information of the AI model (input information for short). The input information is an input parameter used when the terminal device performs AI model inference. Correspondingly, information obtained through AI model inference or predicted information may be referred to as output information of the AI model (output information for short). For example, the input information includes actual measurement information obtained by the terminal device at a moment of performing the AI model inference and/or obtained output information of the AI model. An example in which the terminal infers the CQI in the CSI report by using the AI model is used. The terminal performs AI model inference at a moment T1 to predict a CQI at a moment T2. Input information of the AI model may include CQIs/a CQI actually measured by the terminal at the moment T1 and/or at any moment (for example, a moment T0, T0<T1) before the moment T1. Alternatively, input information of the AI model may include a CQI that is obtained by the terminal through the AI model inference, for example, a CQI at a moment T1 that is predicted at a moment T0 and/or a CQI at the moment T0 that is predicted at a moment T0', where T0'<T0<T1. It may be understood that the input information of the AI model for predicting the CQI is merely an example, and may alternatively be other information.

In another implementation, the indication information #C indicates the communication device whether to send the input information.

(4) Indication information (indication information #D) indicating the communication device to send non-radio information corresponding to the output information.

The non-radio information may be understood as information that is unrelated to or has small correlation to a radio signal.

In an implementation, the indication information #D may indicate the communication device to send non-radio information related to the terminal and/or non-radio information related to a network. In the implementation, the communication device may store the non-radio information related to the terminal and/or the non-radio information related to the network. If the communication device is a terminal, the access network device may send the non-radio information related to the network to the terminal. If the communication device is an access network device, the terminal may send the non-radio information related to the terminal to the access network device. The non-radio information related to the terminal may be determined by the terminal. The non-radio information related to the network may be determined by the access network device. It may be understood that the non-radio information determined by the terminal may be partially the same as or may be completely different from the non-radio information determined by the access network device.

For example, the non-radio information related to the terminal may include at least one of the following information: location information of the terminal, vendor information of the terminal, or channel type information of the terminal. The location information of the terminal may include at least one of the following: physical location information of the terminal, area identification information of the terminal, serving beam information of the terminal, indication information indicating that the terminal is located indoors or outdoors, path information of the terminal, historical serving cell information of the terminal, or other information indicating a location of the terminal. The vendor information of the terminal may include manufacturer information of the terminal and/or chip vendor information of the terminal. The channel type information may indicate that a channel type is an NLOS or a LOS.

For example, the non-radio information related to the network may include: antenna configuration information of a cell, and/or network deployment information. The antenna configuration information of the cell may include at least one of the following information: a quantity of antennas, connection port information, a polarization manner (horizontal or vertical), an uplink and/or downlink downtilt, or a quantity of antenna layers. The network deployment information may indicate deployment of the cell, for example, indicate whether a deployment manner of the cell is an overlay network or a capacity network; or indicate whether a deployment manner of the cell is a macro cell, a small cell, or a micro cell; or indicate whether a deployment manner of the cell is independent deployment or non-independent deployment.

In an implementation, the indication information #D may indicate a type of the non-radio information sent by the communication device. In an example in which the non-radio information is the non-radio information related to the terminal, the management network element may indicate the communication device to send the location information of the terminal and/or the vendor information of the terminal. For another example, the management network element may indicate the communication device to send the location information of the terminal and/or the manufacturer information of the terminal, and not to send the chip vendor information of the terminal.

It may be understood that some non-radio information may be separately obtained by the terminal and the access network device. Therefore, the non-radio information may be considered as the non-radio information related to the terminal, and may also be considered as the non-radio information related to the network. This type of non-radio information may include at least one of the following information: cell configuration information, beam configuration information, or BWP information of the terminal. The cell configuration information may include at least one of the following: a transmit power of a cell, physical cell identification information, or uplink and/or downlink frequency information. The beam configuration information of the cell may include at least one of the following information: a quantity of beams, a beam sweeping periodicity, a beam direction, beam identification information, beam width information, or the like. The bandwidth part information of the terminal indicates BWP information configured by the network device for the terminal device. The BWP information includes at least one of BWP identification information, a subcarrier spacing, bandwidth range information, cyclic prefix (cyclic prefix, CP) information such as a normal cyclic prefix (normal cyclic prefix) or an extended cyclic prefix (extended cyclic prefix), or other information. It may be understood that a classification manner of the non-radio information, that is, specific non-radio information considered to be related to the terminal and specific non-radio information considered to be related to the network, is not particularly limited in this application. For example, all the non-radio information listed above may be considered as non-radio information related to the terminal, or may be considered as non-radio information related to the network. For example, it may be determined, in a manner of predefinition or negotiation between the terminal and the network device, that partial information in the non-radio information listed above is non-radio information related to the terminal, and remaining partial information is non-radio information related to the network. For example, it may be determined, in the manner of predefinition or negotiation between the terminal and the network device, that the non-radio information related to the terminal may include partial information in non-radio information, and the non-radio information related to the network may include partial information in the non-radio information. For example, the BWP information includes the BWP identification information, the subcarrier spacing, and the bandwidth range information. It may be predefined or determined through negotiation that the BWP identification information is the non-radio information related to the terminal and the subcarrier spacing and the bandwidth range information are the non-radio information related to the network. In addition, in another example, when sending the non-radio information based on the indication information #D, the communication device may not distinguish whether the non-radio information is related to the terminal or the network. For example, the communication device sends a non-radio information list to the management network element, where the list includes each piece of non-radio information that corresponds to the output information and that has been obtained by the communication device. In another implementation, the indication information #D indicates the communication device whether to send the non-radio information.

(5) Indication information (indication information #E) indicating the communication device to send actual measurement information at a moment corresponding to the output information. The actual measurement information is information that is of the same type as the output information and that is obtained through actual measurement or is calculated by using actual measurement data as an input parameter. For example, if the CQI at the moment T2 is obtained through the AI model inference at the moment T1, the actual measurement information is a CQI actually calculated by the terminal at the moment T2.

In another implementation, the indication information #E indicates the communication device whether to send the actual measurement information.

(6) Indication information (indication information #F) indicating the communication device to send correct labeling information at a moment corresponding to the output information. The correct labeling information is a correct labeling generated in the machine learning field, for example, standard data generated in a supervised learning process in the machine learning field. For example, if the CQI at the moment T2 is obtained through the AI model inference at the moment T1, the correct labeling information is a CQI obtained by the terminal through simulation at the moment T2.

In another implementation, the indication information #F indicates the communication device whether to send the correct labeling information.

(7) Seventh indication information (indication information #G) indicating the communication device to send accuracy information corresponding to the output information.

In another implementation, the indication information #G indicates the communication device whether to send the accuracy information corresponding to the output information.

(8) Eighth indication information (indication information #H) indicating the communication device to send confidence corresponding to the output information.

In another implementation, the indication information #H indicates the communication device whether to send the confidence information corresponding to the output information.

The accuracy information indicates accuracy of the output information, and the confidence information indicates confidence of the AI model or confidence of the output information. Generally, higher confidence of the AI model indicates higher accuracy of the output information.

For example, the accuracy information may be indication information indicating a level of the confidence of the output information. For example, it may be predefined that the confidence of the output information includes three levels {level 1, level 2, level 3} indicating the confidence in ascending order, and the accuracy information may indicate any one of the three levels. For example, the accuracy information may be a value indicating accuracy of the output information. The value may be an integer, a decimal, or a percentage value. This is not limited. For example, an interval of the accuracy of the output information may be predefined as [0, 100], where 0 indicates lowest accuracy, 100 indicates highest accuracy, and the accuracy information may be any integer in [0, 100]. For another example, the accuracy information may alternatively be a percentage value, and a value range is [0, 100%]. A larger value indicates higher accuracy.

An indication manner of the confidence information is similar to that of the accuracy information, and details are not described again.

(9) Accuracy threshold information of the output information. For example, if the accuracy threshold information indicates a first accuracy threshold, the communication device may report, based on the accuracy threshold information, monitoring information including output information whose accuracy is greater than or equal to the first accuracy threshold, or the communication device may report distribution information corresponding to output information whose accuracy is greater than or equal to the first accuracy threshold.

In an implementation, the AI model used by the communication device is predefined and stored in the communication device.

In an implementation, the AI model used by the communication device is determined by the management network element and notified to the communication device. For example, the management network element may receive the non-radio information from the communication device, determine an AI model that matches the non-radio information, and further send the AI model to the communication device. For example, application scenarios of the AI model may be classified into an indoor scenario and an outdoor scenario. If the non-radio information sent by the communication device indicates that the communication device is located indoors, the management network element may send, to the communication device, an AI model corresponding to the indoor scenario. It may be understood that the management network element may alternatively select an appropriate AI model for the communication device based on another type of non-radio information. For example, the management network element may select an appropriate AI model for the communication device based on a network implementation requirement.

In an implementation, the reference information includes at least one of the following information:
(1) Input information used for performing the AI model inference. For example, when the request information includes the indication information indicating the communication device to send the input information, for example, the indication information #C, the reference information includes the input information. For descriptions of the input information, refer to the foregoing related content.
(2) Non-radio information corresponding to the output information. For example, when the request information includes the indication information indicating the communication device to send the non-radio information, for example, the indication information #D, the reference information includes the non-radio information. For descriptions of the output information and the non-radio information, refer to the foregoing related content.
(3) Confidence information corresponding to the output information.
(4) Accuracy information corresponding to the output information. For descriptions of the confidence information and the confidence information, refer to the foregoing related content. For example, when the request information includes the indication information #G or the indication information #H, the communication device may analyze the output information obtained through the AI model inference, for example, compare the output information with the actual measurement information, to determine the confidence and/or the accuracy of the output information, and therefore send the confidence information and/or the accuracy information to the AI model management network element.
(5) Actual measurement information at the moment corresponding to the output information.
   For example, when the request information includes the indication information indicating the communication device to send the actual measurement information, for example, the indication information #E, the reference information includes the actual measurement information. For descriptions of the actual measurement information, refer to the foregoing related content.
(6) Correct labeling information at the moment corresponding to the output information.
   For example, when the request information includes the indication information indicating the communication device to send the correct labeling information, for example, the indication information #F, the reference information includes the correct labeling information. For descriptions of the correct labeling information, refer to the foregoing related content.
(7) Time information corresponding to the output information. The time information includes time corresponding to the output information and/or time of inferring the output information. For example, if the output information at the moment T2 is obtained at the moment T1 based on the AI model, the moment T2 may be recorded, or the moment T1 and the moment T2 may be recorded. It may be understood that a recorded "moment" may include the moment and any time before the moment.

Reporting of the monitoring information is described by using an example in which the communication device is a terminal in a CSI measurement scenario. The terminal predicts, at the moment T0, the CQI (represented as T1-pCQI) at the moment T1 based on input information (for example, the CQI actually calculated at the moment T0) at the moment T0 by using an AI model for CSI measurement, and further predicts, at the moment T1, CQI information (represented as T2-pCQI) at the moment T2 based on input information (for example, the CQI actually calculated at the moment T1 or T1-pCQI) at the moment T1. In this case, the monitoring information sent by the terminal at the moment T2 may include T2-pCQI and reference information {T1-pCQI, non-radio information related to the terminal at the moment T1, CQI actually calculated at the moment T2, correct labeling information of the CQI at the moment T2, time information at the moment T2}.

In another implementation, the communication device may perform reporting based on a predefined reference information type. For example, it is predefined that the communication device sends the non-radio information corresponding to the output information after receiving the request information. In the implementation, the request information may not include indication information for requesting to send related reference information.

Optionally, in an implementation of this application, the method further includes S303: The management network element determines, based on the monitoring information, an operation manner of the AI model used by the communication device.

Specifically, the management network element may determine, based on the output information, the actual measurement information, and the non-radio information, whether a result of the AI model inference is accurate, for example, whether an expected value is reached, or whether a difference from the actual measurement information is in an allowed range, and determine an appropriate operation manner for the AI model. The operation manner includes any one of the following: changing, optimizing, deactivating, or deleting the AI model used by the communication device. Optimizing the AI model includes changing model information of the AI model, so that the AI model is applicable to a latest network environment of the communication device. The model information may include an AI architecture and/or at least one model parameter. Deactivating the AI model means that the communication device is configured to suspend execution of the AI model, but the communication device may retain configuration information of the AI model, so that the AI model can be quickly started subsequently.

In this application, changing and optimizing the AI model may be considered as updating the AI model.

For example, the communication device is a terminal, the output information includes the CQI at the moment T1 obtained by the terminal through inference and the CQI actually calculated at the moment T1, and the non-radio information includes the indication information indicating that the terminal is located indoors. If the management network element determines that a difference between the CQI obtained through inference and the CQI actually calculated exceeds the allowed range, the management network element may determine to change the AI model for the terminal, for example, change from an AI model matching the indoor scenario to an AI model matching the outdoor scenario.

In this implementation, the management network element determines, based on the monitoring information received from the communication device, an appropriate management policy for the AI model used by the communication device, for example, including whether to change, optimize, deactivate, or delete the AI model used by the communication device.

Optionally, after step S303 is performed, the method further includes S304: The management network element notifies the communication device of the determined operation manner.

For example, the management network element may send notification information to the communication device, where the notification information includes related information of the operation manner. For example, the management network element may send configuration information (configuration information #1 below) of a changed or optimized AI model to the communication device, so that the communication device replaces or optimizes the AI model based on the configuration information #1. For another example, the management network element may send, to the communication device, indication information indicating to delete or deactivate the AI model.

After receiving the configuration information #1, the communication device may perform a corresponding operation on the used AI model, including changing, optimizing, deactivating, or deleting the AI model. For example, if the configuration information is used to change the AI model of the communication device, the configuration information #1 may include information about the changed AI model, for example, an index or an identifier of the AI model. If the configuration information is used to optimize the AI model of the communication device, the configuration information may include updated model information of the AI model, or include model bias information of the AI model, for example, model information that needs to be modified or updated.

The communication device may update the AI model in a timely manner based on a notification of the management unit to obtain a more accurate AI inference result, to improve performance of the AI model; or stop using an inappropriate AI model in a timely manner, to save transmission resources.

It may be understood that "sending information to XX (device)" in this application may be understood as that a destination of the information is the device, and may include directly or indirectly sending the information to the device. "Receiving information from XX (device)" may be understood as that a source of the information is the device, and may include directly or indirectly receiving the information from the device. Information may be necessarily processed between the source for sending the information and the destination, for example, a format change. However, the destination may understand valid information from the source. For example, in this application, information between the communication device and the management network element may be directly transmitted between the communication device and the management network element, or may be forwarded via at least one intermediate node. For example, the intermediate node may parse the received information and then forward the information, or may transparently transmit the information. For example, when the communication device is a terminal, and the management network element is a core network device, an OAM entity, or a third-party application service platform, the management network element may send the request information to the terminal via an access network device accessed by the terminal, and then the terminal may send the monitoring information to the management network element via the access network device. In addition, if the management network element determines or updates the AI model for the terminal, the management network element may also send the AI model or model information of an updated AI model to the terminal via the access network device. For example, if the management network element is an AMF, the AMF may send the request information to a gNB, and then the gNB sends the request information to the terminal. Further, the terminal may report the monitoring information to the gNB, and then the gNB sends the monitoring information to the AMF. If the AMF updates the AI model for the terminal based on the monitoring information, the AMF may send the model information of the updated AI model to the gNB, and then the gNB sends the model information to the terminal. For another example, if the management network element is a DU, the DU may send the request information to the terminal via a CU. Further, the terminal may report the monitoring information to the CU, and then the CU sends the monitoring information to the DU. If the DU updates the AI model for the terminal based on the monitoring information, the DU may send the model information of the updated AI model to the CU, and then the CU sends the model information to the terminal.

According to the information transmission method provided in this application, the communication device sends, to the AI model management network element, the monitoring information including the output information obtained by performing the AI model inference and the reference information. Therefore, the AI model management network element can accurately evaluate performance of the AI model by using the monitoring information, including identifying a reason why the performance of the AI model is not optimal or deteriorates, and further determine the appropriate management policy for the AI model, for example, perform a corresponding operation on the AI model, to improve the performance of the AI model and improve accuracy of inference using the AI model.

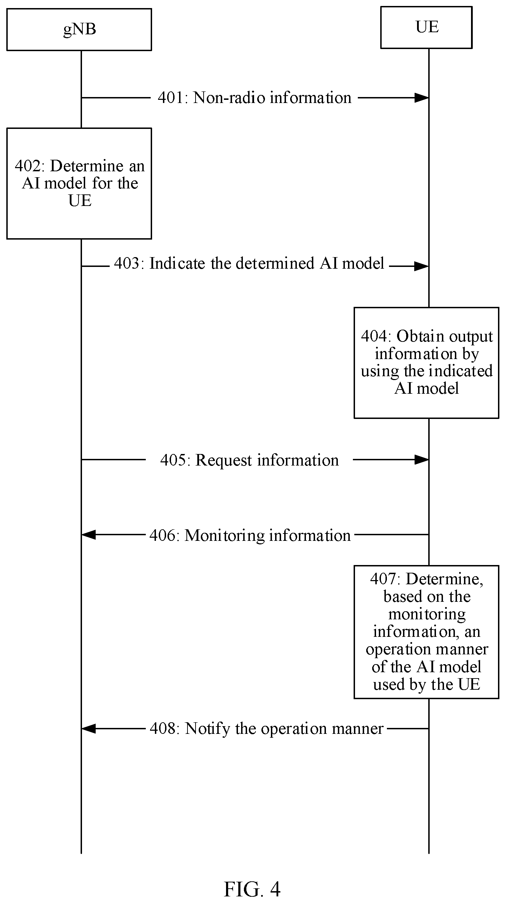

Based on the embodiment shown in FIG. 3, the following describes the information transmission method provided in this application with reference to signaling procedures shown in FIG. 4 to FIG. 6. It may be understood that embodiments provided in this application may be mutually referenced, cited, or combined, and content described in the embodiment in FIG. 3 is not described again. In an implementation shown in FIG. 4, a communication device is UE, a management network element is a gNB, and the UE is in a connected state. The method includes the following steps.

S401: The gNB receives non-radio information from the UE.

Specifically, the UE is in the connected state and has accessed the gNB, and the UE and the gNB may exchange information. For example, the UE sends the non-radio information to the gNB.

S402: The gNB determines an AI model for the UE based on the received non-radio information.

S401 and S402 are optional steps, and the gNB may alternatively determine the AI model for the UE in another manner.

S403: The gNB indicates the determined AI model to the UE.

It may be understood that the gNB may indicate identification or index information of the AI model and/or model information to the UE.

S404: The UE obtains output information by using the indicated AI model.

S405: The gNB sends request information to the UE, to request the UE to report monitoring information.

For example, the request information includes configuration information. The configuration information includes indication information indicating types of the output information and reference information that are sent by the UE, and further includes indication information indicating the UE to send the monitoring information in an immediate reporting manner. For detailed descriptions of the configuration information and the immediate reporting manner, refer to the related content in step S301.

It may be understood that an execution sequence of steps S401 to S404 and step S405 is merely an example, or S405 may be performed before S401 to S404, or an execution sequence of S404 and S405 may be exchanged. In other words, there is no limitation on an execution sequence of receiving the request information for the monitoring information and determining/executing the AI model.

S406: The UE sends the monitoring information to the gNB.

For example, after receiving the request information, the UE sends the monitoring information to the gNB based on the configuration information in the request information. For example, the monitoring information includes the output information and the reference information that are indicated in the configuration information and that are sent by the UE. For detailed descriptions of the monitoring information, refer to the related content in steps S301 and S302.

S407: The gNB determines, based on the monitoring information reported by the UE, an operation manner of the AI model used by the UE.

For example, if the gNB determines to change, optimize, deactivate, or delete the AI model on a UE side, the method may further include S408: The gNB notifies the UE of an operation manner of changing, optimizing, deactivating, or deleting the AI model.

For detailed descriptions of S407 and S408, refer to steps S303 and S304.

In the implementation shown in FIG. 4, the gNB serving as the management network element may obtain the monitoring information from the UE in a timely manner, and therefore can efficiently evaluate performance of the AI model used by the UE, for example, identify whether an inference result of the AI model is accurate, so that appropriate operation management can be performed on the AI model, to improve the performance of the AI model.

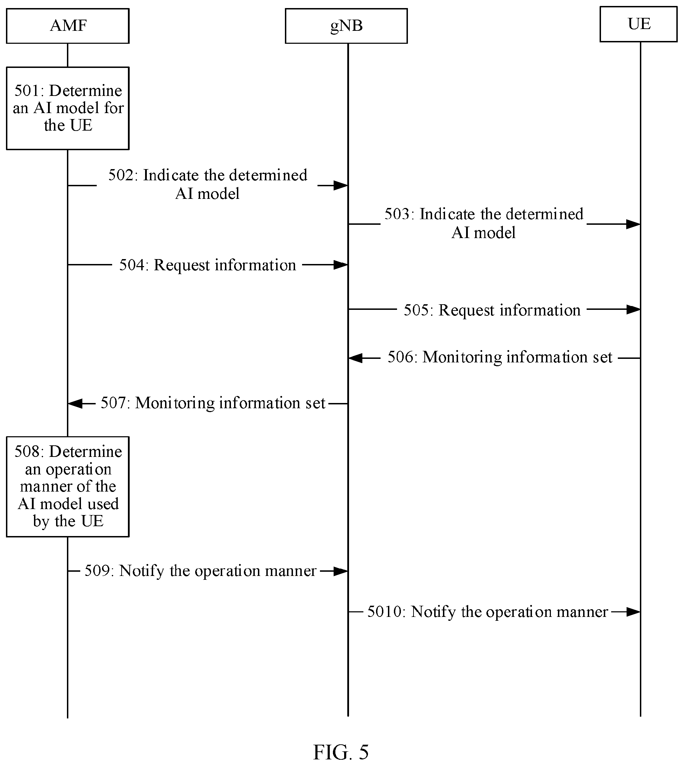

In an implementation shown in FIG. 5, a communication device is UE, a management network element is an AMF, and the UE is in a connected state. The method includes the following steps.

S501: The AMF determines an AI model for the UE.

For example, the AMF may determine the AI model for the UE based on non-radio information sent by an access network side, for example, a gNB accessed by the UE, or determine the AI model for the UE based on a network implementation requirement. This is not limited.

S502: The AMF indicates, to the gNB, the AI model determined for the UE.

S503: The gNB indicates the AI model to the UE.

For example, the gNB may transparently transmit, to the UE, indication information indicating the AI model, or the gNB parses indication information sent by the AMF, and then notifies the UE of the AI model in another indication manner.

S504: The AMF sends first request information to the gNB, to request the UE to report monitoring information.

For example, the first request information includes configuration information. The configuration information includes indication information indicating types of output information and reference information that are sent by the UE, and further includes indication information indicating the UE to send the monitoring information in a centralized reporting manner, and configuration information related to the centralized reporting manner. For detailed descriptions of the configuration information and the centralized reporting manner, refer to related content in step S301.

S505: The gNB sends second request information to the UE, to request the UE to report the monitoring information.

For example, the gNB may transparently transmit the first request information to the UE, and the first request information and the second request information may be a same piece of information. Alternatively, the gNB parses the first request information sent by the AMF, for example, obtains the configuration information in the first request information, includes the configuration information in the second request information generated by the gNB, and sends the second request information to the UE.

S506: The UE sends a monitoring information set to the gNB.

In this implementation, the AMF indicates the UE to send the monitoring information in the centralized reporting manner. Therefore, the UE may record the monitoring information based on the configuration information of the centralized reporting manner. For example, triggered by a configured recording condition, the monitoring information is recorded and stored at a configured recording interval in a configured time range, and at least one piece of stored monitoring information may be considered to belong to one monitoring information set. For example, output information in the monitoring information may be obtained through inference based on the AI model indicated in step S503. Further, when a trigger condition for sending the monitoring information by the UE is met, the UE sends the monitoring information set to the gNB, where the trigger condition includes, for example, that a quantity of monitoring information recorded and stored by the UE reaches a predetermined quantity.

S507: The gNB indicates the monitoring information set to the AMF.

For example, the gNB may transparently transmit the monitoring information set to the UE, or the gNB parses the monitoring information set, and then notifies the AMF of the monitoring information set in another indication manner.

In an implementation, the method further includes the following S508 to S5010.

S508: The AMF determines an operation manner of the AI model used by the UE.

For example, the AMF determines, based on the monitoring information set reported by the UE, to perform an operation such as change, optimization, deactivation, or deletion, on the AI model used by the UE.

S509: The AMF notifies the gNB of the determined operation manner.

S5010: The gNB notifies the UE of the determined operation manner.

For descriptions of the operation manner, refer to related content in steps S303 and S304.

In the implementation shown in FIG. 5, the centralized reporting manner is configured, so that the UE may report, to the AMF serving as the management network element, the monitoring information set including a plurality of pieces of monitoring information, to reduce excessive signaling overheads caused by frequent sending of the monitoring information. In addition, the AMF may comprehensively and accurately evaluate, based on the monitoring information set, performance of the AI model used by the UE.

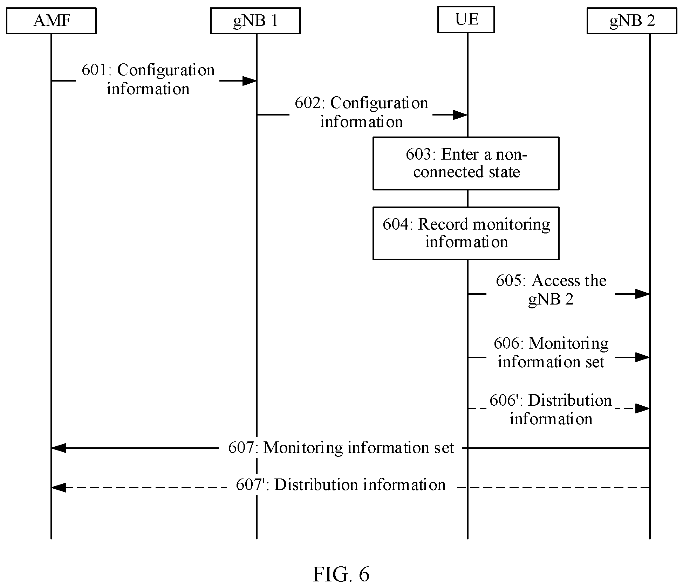

In an information transmission method shown in FIG. 6, a communication device is UE, and a management network element is an AMF. The method includes the following steps.

S601: The AMF sends configuration information to a gNB 1.

The configuration information includes indication information indicating types of output information and reference information that are sent by the UE, and may further include configuration information separately related to delayed reporting, centralized reporting, and immediate reporting. For detailed descriptions of the configuration information and various reporting manners, refer to related content in step S301.

S602: The gNB 1 sends the configuration information to the UE.

It may be understood that, in an execution process of steps S601 and S602, the UE is in a connected state and has accessed the gNB 1, and the UE and the gNB may exchange information.

S603: The UE enters a non-connected state.

S604: The UE records monitoring information.

For example, the UE performs inference based on a predefined AI model, to obtain output information, and records reference information corresponding to the output information.

For example, if the configuration information received by the UE includes indication information indicating the UE to analyze the output information, which refers to the foregoing indication information #1, the UE may generate distribution information for the obtained output information. For example, a monitoring information set includes partial output information determined based on the distribution information and the distribution information. For detailed descriptions of the distribution information, refer to related content in step 301.

S605: The UE accesses a gNB 2.

S606: The UE sends the stored monitoring information set to the gNB 2.

For example, the UE may directly send the monitoring information set to the gNB 2 after accessing the gNB 2.

For example, after the UE accesses the gNB 2, the gNB 2 sends, to the UE, request information for requesting the monitoring information.

For example, the UE may send, to the gNB 2, indication information indicating that the monitoring information is to be reported. The gNB 2 determines, based on the indication information, whether the monitoring information of the UE is needed, and if determining that the monitoring information is needed, sends, to the UE, the request information for requesting the monitoring information.

S607: The gNB 2 sends the monitoring information set to the AMF.

Further, after receiving the monitoring information set, the AMF may determine, based on content of the monitoring information, performance of an AI model used by the UE, to determine whether to adjust the AI model used by the UE. Refer to step S508. Details are not described again.

For example, the gNB may transparently transmit the monitoring information set to the UE, or the gNB parses the monitoring information set, and then notifies the AMF of the monitoring information set in another indication manner.

In another implementation, S606 may be replaced with S606', and S606' includes: The UE sends the distribution information to the gNB. In other words, the UE does not need to send the monitoring information set to the gNB, and a network side determines, based on the distribution information, performance of an AI model used by the UE. Correspondingly, S607 may be replaced with S607', and S607' includes: The gNB sends the distribution information to the AMF.

In the implementation shown in FIG. 6, the delayed reporting manner is configured, so that the UE in the non-connected state may collect the monitoring information, to provide more comprehensive monitoring information for the management network element. In addition, the UE may further preliminarily analyze the monitoring information, to reduce signaling overheads for reporting the monitoring information.

Optionally, in a possible implementation, the communication device that performs AI model inference is a terminal, the management network element is an access network device, and the access network device includes a CU and a DU. The CU may be responsible for exchanging an RRC message with the terminal. The DU may be responsible for managing the AI model and processing information received from the terminal. For example, the DU manages the AI model based on AI model-related information sent by the terminal. The DU may further generate information and send the information to the terminal directly or via the CU. In another implementation, alternatively, the DU may be used as the management network element, and the CU is used as an intermediate node used for communication between the terminal and the DU. It may be understood that the DU or the access network device using the CU-DU architecture may be used as the management network element in the information transmission methods described in the foregoing examples in FIG. 3 to FIG. 6.

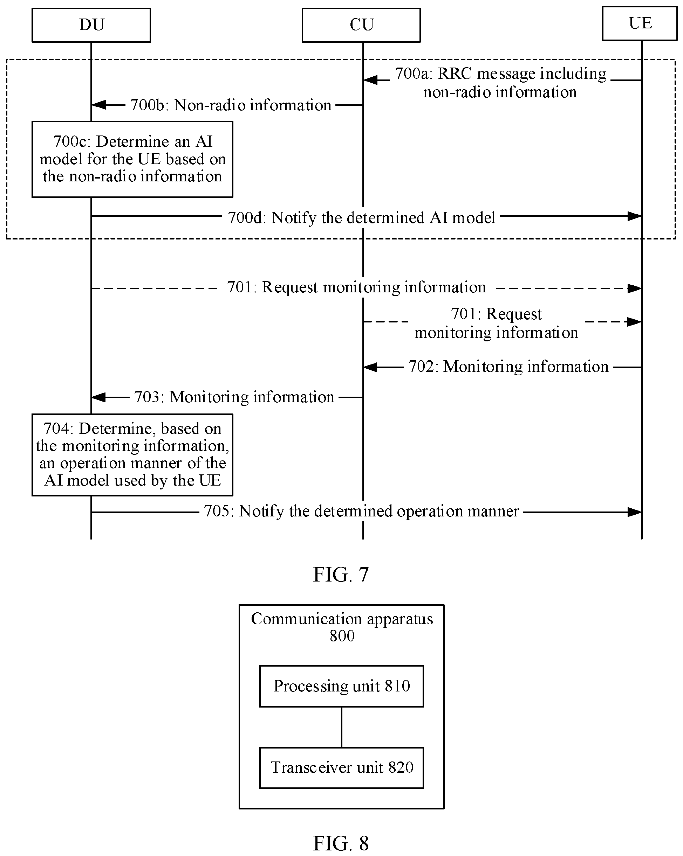

To describe the technical solution in a scenario in which a management network element is an access network device using a CU-DU architecture more clearly, the following describes, with reference to FIG. 7, an information transmission method provided in this application. Content described in FIG. 3 to FIG. 6 is not described again.

The information transmission method shown in FIG. 7 includes the following steps.

S701: A CU or a DU requests monitoring information from UE.

For example, the CU or the DU sends request information to the UE, where the request information is used to request the monitoring information.

For example, the DU sends, to the CU, an indication indicating that the monitoring information is expected to be obtained, and further, the CU sends, to the UE, the request information used to request the monitoring information.

The request information sent by the CU to the UE may be an RRC message, and the request information sent by the DU to the UE may be layer 1 or layer 2 signaling.

S702: The UE sends the monitoring information to the CU or the DU.

For detailed descriptions of the monitoring information, refer to related content in S301 and S302.

For example, when the UE sends the monitoring information to the CU, the method further includes S703: The CU sends the monitoring information to the DU.

After the DU receives the monitoring information, the method may further include S704: The DU determines, based on the monitoring information, an operation manner of an AI model used by the UE.

S705: The DU notifies the UE of the determined operation manner.

For example, the DU directly sends notification information to the UE, or the DU sends notification information to the UE via the CU.

For detailed descriptions of S704 and S705, refer to S303 and S304.

In an implementation, output information and reference information in the monitoring information may be separately transmitted, and S702 may be replaced with S702-1 and S702-2. S702-1 includes: The UE sends an RRC message including the reference information to the CU, and then the CU sends the received reference information to the DU. S702-2 includes: The UE sends layer 1 or layer 2 signaling including the output information to the DU.

In an implementation, the AI model used by the UE is determined by the DU and notified to the UE. For example, the DU determines the AI model based on non-radio information sent by the UE. In this example, the method further includes the following steps.

S700-a: The UE sends an RRC message including the non-radio information to the CU.

S700-b: The CU sends the non-radio information to the DU.

S700-c: The DU determines the AI model for the UE based on the non-radio information.

S700-d: The DU indicates the determined AI model to the UE.

Specifically, the DU may indicate the determined AI model to the UE directly or via the CU.

Optionally, in another possible implementation, the access network device (the CU or the DU) used as the management network element may be further divided into a first network element having an AI decision function and a second network element having an AI implementation function. The first network element may be referred to as an AI controller, or a near-real-time radio access network intelligent controller. For example, the first network element may perform step 303. The second network element is configured to manage sending or receiving of information between the second network element and another access network device or a terminal device, and forward related information to the first network element. For example, the second network element may perform step 301 and step 304. The first network element may make a decision based on the foregoing information, and send determined configuration information to the second network element, so that the second network element performs a subsequent operation based on the configuration information, for example, sends the configuration information to the another access network device or the terminal device.

It may be understood that in embodiments of this application, the communication device and/or the AI model management network element may perform some or all steps in embodiments of this application. These steps or the operations are merely examples. In embodiments of this application, other operations or variations of various operations may be further performed. In addition, the steps may be performed in a sequence different from a sequence presented in embodiments of this application, and not all the operations in embodiments of this application may be performed.

It may be understood that, to implement the functions in the foregoing embodiments, the communication device or the AI model management network element includes a corresponding hardware structure and/or software module for performing each function. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

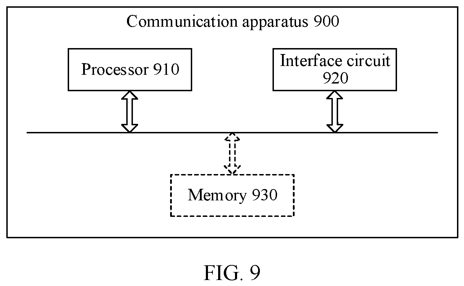

FIG. 8 and FIG. 9 are diagrams of possible structures of communication apparatuses according to embodiments of this application. These communication apparatuses may be configured to implement functions of the communication device or the AI model management network element in the foregoing method embodiments, and therefore can also implement beneficial effects of the foregoing method embodiments. In embodiments of this application, the communication apparatus may be the communication device shown in FIG. 1, or may be the AI model management network element shown in FIG. 1, or may be a module (for example, a chip) used in the communication device or the AI model management network element. The communication device may be a terminal or an access network device, and the AI model management network element may be an access network device, a core network device, an OAM entity, or a third-party service platform.

A communication apparatus 800 shown in FIG. 8 includes a processing unit 810 and a transceiver unit 820. The communication apparatus 800 is configured to implement functions of the communication device or the AI model management network element in the foregoing method embodiments.

In an implementation, when the communication apparatus 800 is configured to implement functions of the AI model management network element, the communication apparatus 800 may be configured to perform the steps performed by the AI model management network element in the embodiments shown in FIG. 3 to FIG. 7. For example, the processing unit 810 is configured to request monitoring information from a communication device through the transceiver unit 820. The transceiver unit 810 is further configured to receive the monitoring information from the communication device, where the monitoring information includes output information of AI model inference and reference information related to the AI model inference; or the monitoring information includes first indication information, and the first indication information indicates distribution of the output information obtained through the AI model inference in one or more accuracy or confidence ranges. Optionally, the processing unit 810 is further configured to determine, based on the monitoring information, an operation manner of an AI model used by the communication device. The operation manner may include any one of the following: changing the AI model used by the communication device, optimizing the AI model used by the communication device, deactivating the AI model used by the communication device, or deleting the AI model used by the communication device.

In an implementation, when the communication apparatus 800 is configured to implement functions of the communication device, the communication apparatus 800 may be configured to perform the steps performed by the communication device in the embodiments shown in FIG. 3 to FIG. 7. For example, the transceiver unit 810 is configured to receive a request for monitoring information from an AI management network element, and send the monitoring information to the AI management network element. The processing unit 820 may be configured to determine the monitoring information. The monitoring information includes output information of AI model inference and reference information related to the AI model inference; or the monitoring information includes first indication information, and the first indication information indicates distribution of the output information obtained through the AI model inference in one or more accuracy or confidence ranges. Optionally, the processing unit 820 may be further configured to determine the distribution of the output information in the one or more accuracy or confidence ranges.

For more detailed descriptions of functions performed by the units in the communication apparatus 800, refer to the descriptions of the steps performed by the AI model management network element or the communication device in the foregoing method embodiments. Details are not described again. It should be understood that division into the units in the communication apparatus 800 is merely logical function division. During actual implementation, all or some of the units may be integrated into one physical entity, or may be physically separated. For example, the transceiver unit 820 may be divided into a receiving unit and a sending unit. When the communication apparatus 800 is a communication apparatus on an access network side, the transceiver unit 820 may be further divided into a first transceiver unit communicating with a terminal and a second transceiver unit communicating with another network device such as a base station or an OAM.

All the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated together, or may be implemented independently. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in the form of software invoked by the processing element.

In an example, a unit in any one of the foregoing apparatuses may be one or more integrated circuits configured to implement the foregoing methods, for example, one or more application-specific integrated circuits (Application-Specific Integrated Circuit, ASIC), one or more microprocessors (digital signal processor, DSP), one or more field programmable gate arrays (Field Programmable Gate Array, FPGA), or a combination of at least two types of these integrated circuits. For another example, when a unit in an apparatus may be implemented in a form of invoking a program by a processing element, the processing element may be a general-purpose processor, for example, a central processing unit (Central Processing Unit, CPU) or another processor that can invoke a program, or may be a digital signal processor (Digital Signal Processor, DSP), or another programmable logic device, a transistor logic device, a hardware component, or any combination thereof. The general-purpose processor may be a microprocessor, or any regular processor, or the like. For another example, the units may be integrated and implemented in a form of a system-on-a-chip (system-on-a-chip, SoC).

The foregoing unit for receiving (for example, a communication unit) is an interface circuit of the apparatus, and is configured to receive a signal from another apparatus. For example, when the apparatus is implemented by using a chip, the receiving unit is an interface circuit that is of the chip and that is configured to receive a signal from another chip or apparatus. The foregoing unit for sending (for example, a sending unit or a communication unit) is an interface circuit of the apparatus, and is configured to send a signal to another apparatus. For example, when the apparatus is implemented by using the chip, the sending unit is an interface circuit that is of the chip and that is configured to send a signal to another chip or apparatus.

A communication apparatus 900 shown in FIG. 9 includes a processor 910 and an interface circuit 920. The processor 910 and the interface circuit 920 are coupled to each other. It may be understood that the interface circuit 920 may be a transceiver or an input/output interface. Optionally, the communication apparatus 900 may further include a memory 930, configured to store instructions to be executed by the processor 910, store input data required for running the instructions by the processor 910, or store data generated after the processor 910 runs the instructions.

When the communication apparatus 900 is configured to implement the foregoing method embodiments, the processor 910 is configured to implement functions of the processing unit 810, and the interface circuit 920 is configured to implement functions of the transceiver unit 820.

When the communication apparatus is a chip used in a terminal, the chip of the terminal implements functions of the terminal device serving as an AI model management network element or a communication device in the foregoing method embodiments. The chip of the terminal receives information from another module (for example, a radio frequency module or an antenna) in the terminal device, where the information is sent by a radio access network device to the terminal; or the chip of the terminal sends information to another module (for example, a radio frequency module or an antenna) in the terminal device, where the information is sent by the terminal device to an access network device.

When the communication apparatus is a module used in a network device, the module of the network device implements functions of the network device serving as an AI model management network element or a communication device in the foregoing method embodiments. The module in the network device may receive information from another module (for example, a radio frequency module or an antenna) in the network device, where the information is sent by, for example, the terminal device to the network device; or the module in the network device sends information to another module (for example, a radio frequency module or an antenna) in the network device, where the information is sent by, for example, the network device to the terminal device. For example, the network device includes an access network device or a core network device. When the network device is an access network device, the module in the network device may be a baseband chip in the access network device, or may be a DU or another module.

In an implementation, this application provides a communication system, including an AI model management network element and a communication device. The AI model management network element may implement functions of the AI model management network element in the embodiments shown in FIG. 3 to FIG. 7, and the communication device may implement functions of the communication device in the embodiments shown in FIG. 3 to FIG. 7.

For example, the communication device is a terminal, and the AI model management network element is a network device, an OAM entity, or a third-party application service platform; or the communication device is a network device, and the AI model management network element is a terminal, an OAM entity, or a third-party application service platform. The network device includes an access network device or a core network device.

For example, the communication system further includes an intermediate node, and the intermediate node is configured to forward information transmitted between the AI model management network element and the communication device. For example, the AI model management network element in the communication system is a core network device, the communication device is a terminal, the intermediate node is an access network device, and the access network device is separately communicatively connected to the core network device and the terminal. In an implementation, this application provides a communication system, including an AI model management network element and an intermediate node. The AI model management network element may implement functions of the AI model management network element in the embodiments shown in FIG. 3 to FIG. 7, and the intermediate node is configured to forward information transmitted between the AI model management network element and a communication device.

In an implementation, this application provides a communication system, including a communication device and an intermediate node. The communication device may implement functions of the communication device in the embodiments shown in FIG. 3 to FIG. 7, and the intermediate node is configured to forward information transmitted between the communication device and the AI model management network element.

In an implementation, this application provides a base station including a CU and a DU. The base station or the DU in the base station may implement functions of the AI model management network element in the embodiments shown in FIG. 3 to FIG. 7.

The method steps in embodiments of this application may be implemented in a hardware manner, or may be implemented in a manner of executing software instructions by the processor. The software instruction may be composed of corresponding software modules. The software modules may be stored in a random access memory, a flash memory, a read-only memory, a programmable read-only memory, an erasable programmable read-only memory, an electrically erasable programmable read-only memory, a register, a hard disk, a removable hard disk, and a compact disc read-only memory (compact disc read-only memory, CD-ROM) or any other form of storage medium well known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in a radio access network device or a terminal device. Certainly, the processor and the storage medium may alternatively exist as discrete components in a radio access network device or a terminal device.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. A computer program (Computer Program) is a group of instructions that instruct each step of an electronic computer or another device with a message processing capability, is usually written in a programming language, and runs on a target architecture. When the computer program or instructions are loaded and executed on a computer, all or some of the procedures or functions described in embodiments of this application are performed. The computer may be a general-purpose computer, a dedicated computer, a computer network, an access network device, a terminal device, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

The protocol in this application may be a communication protocol or a specification, for example, a 3GPP communication protocol.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that, in embodiments of this application, the terminal device and/or the radio access network device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. An information transmission method, wherein the method is applied to an artificial intelligence AI model management network element, and the method comprises:
requesting monitoring information from a communication device; and
receiving the monitoring information from the communication device, wherein
the monitoring information comprises output information of AI model inference and reference information related to the AI model inference.

2. The method according to claim 1, wherein the reference information indicates at least one of the following:
input information used for performing the AI model inference;
non-radio information corresponding to the output information;
confidence information corresponding to the output information;
accuracy information corresponding to the output information;
actual measurement information at a moment corresponding to the output information; or
correct labeling information at a moment corresponding to the output information.

3. The method according to claim 2, wherein the non-radio information comprises at least one of the following: location information of the communication device when the AI model inference is performed, vendor information of the communication device, channel type information of the communication device, antenna configuration information of a cell, beam configuration information of a cell, type information of a cell, or network deployment information.

4. The method according to any one of claims 1 to 3, wherein requesting the monitoring information from the communication device comprises: sending, to the communication device, configuration information used to configure the monitoring information.

5. The method according to claim 4, wherein the configuration information comprises at least one of the following:
first indication information indicating a type of the output information;
second indication information indicating a reporting manner of the monitoring information;
third indication information indicating the communication device to send the input information used for performing the AI model inference;
fourth indication information indicating the communication device to send the non-radio information corresponding to the output information;
fifth indication information indicating the communication device to send the actual measurement information at the moment corresponding to the output information;
sixth indication information indicating the communication device to send the correct labeling information at the moment corresponding to the output information;
seventh indication information indicating the communication device to send the accuracy information corresponding to the output information;
eighth indication information indicating the communication device to send the confidence information corresponding to the output information; or
accuracy threshold information of the output information.

6. The method according to claim 5, wherein the reporting manner comprises: immediate reporting, centralized reporting, or delayed reporting.

7. The method according to claim 6, wherein when the reporting manner of the monitoring information is indicated as the centralized reporting, the configuration information further comprises information related to a trigger condition for triggering the communication device to send the monitoring information.

8. The method according to claim 7, wherein the trigger condition comprises that a quantity of monitoring information stored in the communication device reaches a predetermined quantity or a stored amount of the monitoring information reaches a capacity threshold.

9. The method according to any one of claims 5 to 8, wherein the first indication information indicates the communication device to send any one or more types of the following output information:
cell information, a channel state information CSI report, beam information, or positioning information.

10. The method according to any one of claims 1 to 9, wherein the method further comprises:
determining, based on the monitoring information, an operation manner of an AI model used by the communication device.

11. The method according to claim 10, wherein the operation manner comprises any one of the following:
changing the AI model used by the communication device, optimizing the AI model used by the communication device, deactivating the AI model used by the communication device, or deleting the AI model used by the communication device.

12. The method according to claim 10 or 11, wherein the method further comprises:
notifying the communication device of the operation manner.

13. The method according to any one of claims 1 to 12, wherein the method further comprises:
receiving the non-radio information from the communication device;
determining an AI model that matches the non-radio information; and
indicating the AI model to the communication device.

14. The method according to any one of claims 5 to 9, wherein when the reporting manner of the monitoring information is indicated as the centralized reporting or the delayed reporting, the configuration information further comprises at least one of the following:
a recording interval of the monitoring information, valid area information, recording time range information of the monitoring information, or recording condition information of the monitoring information.

15. The method according to claim 7, 8, or 14, wherein receiving the monitoring information from the communication device comprises:
receiving a monitoring information set from the communication device, wherein the monitoring information set comprises the monitoring information whose quantity reaches the predetermined quantity and that is stored in the communication device, or comprises the monitoring information that reaches the capacity threshold and that is stored in the communication device.

16. The method according to claim 14, wherein receiving the monitoring information from the communication device comprises: receiving a monitoring information set from the communication device in a connected state, wherein the monitoring information set comprises the monitoring information obtained when the communication device is in a non-connected state.

17. The method according to any one of claims 14 to 16, wherein the output information comprises partial output information that meets a condition and that is determined by the communication device by analyzing initial output information.

18. The method according to claim 17, wherein the configuration information further comprises indication information indicating the communication device to analyze the output information.

19. The method according to any one of claims 1 to 18, wherein the reference information comprises ninth indication information, and the ninth indication information indicates distribution of the output information in one or more accuracy or confidence ranges.

20. The method according to any one of claims 1 to 19, wherein the communication device is a terminal device, and the AI model management network element is a network device, an operation, administration and maintenance OAM entity, or a third-party application service platform; or
the communication device is a network device, and the AI model management network element is a terminal device, an OAM entity, or a third-party application service platform; and
the network device comprises an access network device or a core network device.

21. A communication apparatus, comprising a unit or a module configured to perform the method according to any one of claims 1 to 20.

22. A communication apparatus, comprising a processor, wherein the processor is configured to perform the method according to any one of claims 1 to 20.

23. A computer-readable storage medium, wherein the computer-readable storage medium stores a computer program, and when the computer program is run by a communication apparatus, the communication apparatus is enabled to perform the method according to any one of claims 1 to 20.
